# EUROPÄISCHE PATENTSCHRIFT

(11) **EP 0 582 830 B1**
(45) Veröffentlichungstag und Bekanntmachung des Hinweises auf die Patenterteilung: **19.03.1997**
(21) Anmeldenummer: 93110708.0
(22) Anmeldetag: 05.07.1993
(51) Int. Cl.: G01N 27/407

(54) **Planarer Sensor aus Keramikmaterial zum Nachweis von brennbaren Gasen**
Ceramic planar sensor for detection of combustable gases
Détecteur planaire en céramique pour la détection des gaz combustibles

(30) Priorität: 31.07.1992 DE 4225279
(43) Veröffentlichungstag der Anmeldung: 16.02.1994
(73) Patentinhaber: HOECHST AKTIENGESELLSCHAFT, 65926 Frankfurt am Main (DE)
(72) Erfinder: Böcker, Wolfgang, Dr., D-6239 Eppstein/Ts. (DE); Köstler, Christine, Dr., D-6232 Bad Soden/Ts. (DE); Moser, Hermann, Dr., D-6100 Darmstadt (DE); Roosen, Andreas, Dr., D-6238 Hofheim/Ts. (DE)

(56) Entgegenhaltungen:
- EP-A- 0 203 351
- EP-A- 0 331 050
- EP-A- 0 390 337
- EP-A- 0 466 020
- EP-A- 0 468 500
- EP-A- 0 512 500
- DE-A- 3 942 384

## Beschreibung

Die vorliegende Erfindung betrifft einen planaren Sensor aus Keramikmaterial, der - in ein Gehäuse eingebaut - zur Messung und zum Nachweis brennbarer Gase und/oder des Sauerstoffgehaltes in Verbrennungsöfen oder in den Abgasen von Verbrennungsmotoren dienen kann. Die Erfindung betrifft ferner ein Verfahren zur Herstellung eines solchen planaren Sensors ausgehend von keramischen Folien auf Basis von Zirkondioxid.

Mit dem Einsatz von Katalysatoren, die sich dazu eignen, in den Verbrennungsabgasen von Brennkraftmaschinen und Verbrennungsöfen enthaltene schädliche Gase wie Kohlenmonoxid, Stickstoffoxide oder nicht oder nur partiell oxidierte Kohlenwasserstoffe wirkungsvoll zu zersetzen, ist im Automobilbau eine neue Ära angebrochen. Die tägliche Praxis hat aber gezeigt, daß die Katalysatoren, die ihren bestimmungsgemäßen Einsatzzweck theoretisch über Jahrzehnte einwandfrei erfüllen sollten, mitunter doch einem nicht unbeachtlichen Alterungsprozess unterworfen sind. Nach individuell unterschiedlicher Betriebsdauer reduziert sich die sogenannte Konversionseffektivität des Katalysators und führt damit zu einem ungewollt höheren Schadstoffausstoß, der die Umwelt belastet. Um diese unnötige Freisetzung von Schadstoffen niedrig zu halten, müssen die Abgase auch dann noch einer ständigen Kontrolle unterworfen werden, wenn sie den Katalysator bereits verlassen haben.

Aus der DE-OS 40 21 929 ist bereits ein Sensor bekannt, der dem Katalysator in Automobilen nachgeschaltet werden kann und der geeignet ist, den Anteil an Wasserstoff in Verbrennungsabgasen, insbesondere auch bei gleichzeitiger Anwesenheit von Sauerstoff, zu bestimmen. Der bekannte Sensor ist auch in einer planaren Ausführungsform beschrieben. Dieser Sensor hat aber den Nachteil, daß die jeweiligen Einzelanteile der unterschiedlichen Schadstoffgase in der Gesamtmischung nicht eindeutig unterscheidbar angezeigt werden können.

Es bestand daher für die Erfindung die Aufgabe einen miniaturisierten Sensor bereitzustellen, insbesondere mit planarem Aufbau, der universell für die kontinuierliche Bestimmung nicht nur von Sauerstoff, sondern auch von brennbaren Gasen in Verbrennungsabgasen variabler Zusammensetzung und Temperatur, geeignet ist und der die quantitative Erfassung der Einzelanteile der gasförmigen Komponenten im Gesamtgemisch erlaubt.

Gelöst wird diese Aufgabe durch einen Sensor der eingangs genannten Gattung, dessen Kennzeichenmerkmal darin zu sehen ist, daß er einen wenigstens fünfschichtigen Aufbau auf Basis einer Kombination von drei Zirkondioxidschichten mit zwei Aluminiumoxidschichten besitzt, wobei ein metallischer Heizleiter zwischen zwei Aluminiumoxidschichten eingebettet ist und wobei drei Zirkondioxidschichten mit zwei Platinelektroden und einer weiteren Elektrode aus einer binären oder ternären Legierung von Platin mit Gold, Nickel, Kupfer, Rhodium, Ruthenium, Palladium oder Titan kombiniert sind.

Aus EP-A-0 203 351 is ein ähnliche Sensor mit mindestens fünfschichtigem Aufbau bekannt. Er besteht aus einem zwischen zwei Al₂O₃-Schichten eingebetteten Heizleitern und ZrO₂-Schichten, die Platinelektroden tragen. Der Sensor mißt nur Sauerstoff.

Die Zirkondioxidmasse des Sensors diese Anmeldung kann zusätzlich anorganische Dotierstoffe enthalten. Als anorganische Dotierstoffe kommen CaO, MgO, CeO und Y₂O₃ in Frage. Vorzugsweise wird die Zirkondioxidmasse mit Y₂O₃ dotiert. Auf diese Weise wird eine große Anzahl von Leerstellen für O²⁻-lonen erzeugt, die eine lonenleitfähigkeit der Keramik bewirken. Im Bereich zwischen 3,5 und 14,0 Gew.-% Y₂O₃, vorzugsweise von 5 bis 10 Gew.-%, bezogen auf die Gesamtmenge an Zirkondioxidmasse, ist die lonenleitfähigkeit für den bestimmungsgemäßen Einsatz des Sensors im Anschluß an den Katalysator besonders geeignet. Die richtige Wahl des Y-Gehaltes verbessert ferner die Thermoschockstabilität des Sensors. Oxidmischungen mit 5 Gew.-% Y₂O₃ führen beim Sintem zu rein tetragonalen Körnern. Mischungen mit 10 Gew.-% Y₂O₃ führen zu einer Mischung aus tetragonalen und kubischen Körnern. In beiden Fällen wird durch eine sogenannte Umwandlungsverstärkung unerwünschte Rißausbreitung in der Keramik behindert oder ganz unterbunden. Der Einsatz eines Zirkondioxids, das Y₂O₃ enthält, ist u.a. aus der DE-PS 35 37 709 bekannt.

Die Zirkondioxidschichten sind erfindungsgemäß so angeordnet, daß auf einer ersten Schicht eine Elektrode aus Platin angeordnet ist, die in Form einer Paste aufgetragen wird, die das Metall als feinteiliges Pulver zusammen mit organischen Bindemitteln und gegebenenfalls Lösemittel enthält. Auf der ersten Schicht mit der Elektrode aus Platin ist eine zweite Schicht aus Zirkondioxid angeordnet, die eine zentrale Ausnehmung aufweist, die wiederum eine Verbindung zu einer Außenkante der Schicht besitzt. Den Abschluß bildet eine dritte Schicht aus Zirkondioxid, die auf ihrer Oberseite, die der zweiten Schicht mit der Ausnehmung abgewandt ist, zwei vorzugsweise parallel angeordnete Elektroden aus Platin und aus einer Platinlegierung trägt. Auch die Elektroden der dritten Schicht werden bevorzugt in Form von Pasten aufgetragen, die Platin, beziehungsweise die Legierung, als feinteiliges Pulver zusammen mit organischen Bindemitteln und gegebenenfalls noch Lösemittel enthalten. Das Auftragen der Elektroden kann aber auch nach anderen bekannten Methoden vorgenommen werden, beispielsweise durch Aufsputtern, durch galvanische Abscheidung oder nach der Methode der Chemical Vapor Deposition, bei der vorher gebildete flüchtige Precursoren an die Substratoberfläche herangetragen und dort zersetzt werden.

Die Schichtdicken der einzelnen Zirkondioxidschichten können unterschiedlich sein und liegen im Bereich von 0,2 bis 2,0 mm, vorzugsweise von 0,5 bis 1,1 mm, besonders bevorzugt von 0,5 bis 0,9 mm.

Auf der Seite der Dreischichtkombination aus Zirkondioxidschichten, die keine Elektroden trägt, ist erfindungsgemäß das elektrische Heizelement aus zwei Aluminiumschichten und einem elektrischen Heizleiter angeordnet. Das Heizelement erlaubt eine zuverlässige Bestimmung der Verbrennungsabgase durch das Zirkondioxidsensorelement auch dann, wenn diese noch kalt sind oder eine bestimmte Betriebstemperatur noch nicht erreicht haben. Das Heizelement weist einen schichtförmigen Aufbau auf, wobei im Inneren der elektrisch isolierenden Keramik aus Al₂O₃ der elektrische Heizleiter vorzugsweise mäanderförmig verläuft und aus einem geeigneten schwer schmelzbaren Metall geringer Leitfähigkeit (z.B. Wolfram) aufgebaut ist. Über zwei nach außen weisende Kontakte kann der elektrische Heizleiter mit einer Stromquelle verbunden werden. Zweckmäßigerweise ist das Heizelement über einen temperaturabhängigen Widerstand so geschaltet, daß bei höheren Temperaturen der zu messenden Verbrennungsabgase die Heizleistung des Heizelementes reduziert wird.

Das Heizelement kann mechanisch (z.B. durch einen Klemmechanismus oder eine Andruckfeder) mit dem eigentlichen Sensor aus Zirkondioxidschichten und Elektroden verbunden werden.

Für den Gebrauch wird der Sensor üblicherweise in ein geeignetes Gehäuse so eingebaut, daß die Schichtebenen parallel zur Gehäuseachse stehen. Das Gehäuse kann zweckmäßigerweise aus korrosionsfestem Metall, beispielsweise aus Edelstahl aufgebaut sein, wobei das Innere des Gehäuses durch ein Keramikelement gasdicht in zwei Kammern unterteilt wird, deren eine mit den Verbrennungsabgasen in unmittelbarem Kontakt steht und deren andere von den Verbrennungsabgasen isoliert ist. Das erfindungsgemäße Zirkondioxidsensorelement ist so angeordnet, daß die freien Elektroden sich in der Kammer mit den Verbrennungsabgasen befinden, während der Spannungsabgriff in der isolierten Kammer erfolgt. Der Spannungsabgriff selbst soll potentialfrei erfolgen, um die Anzahl möglicher Fehlerquellen bei der Messung gering zu halten. Das Gehäuse ist an seiner Außenseite mit Anschlußdrähten und Steckern versehen, um zum Einbau in Verbrennungsmotoren von Automobilen oder in Verbrennungsanlagen geeignet zu sein. Die geometrischen Abmessungen des flächigen Sensors sind beliebig. Er kann beispielsweise rechteckig, quadratisch oder rund sein. Zweckmäßig für den Einbau und deswegen bevorzugt ist eine etwa länglich rechteckige Form. Die Gesamtdicke des Sensors beträgt vorzugsweise etwa 2 bis 6 mm. Die Außenabmessungen betragen vorzugsweise 10 x 50 mm.

Überraschenderweise hat sich herausgestellt, daß der erfindungsgemäße Aufbau des Sensors trotz seiner Einfachheit eine quantitative Erfassung der wichtigsten Einzelbestandteile eines Gemisches von Verbrennungsabgasen möglich macht. Das Funktionsprinzip der Bestimmung sieht vor, daß zunächst der Partialdruck einer Einzelkomponente durch die Spannungsdifferenz zwischen der Referenzelektrode im Innern des Sensors und einer ersten Meßelektrode erfaßt wird. Dieses Signal wird zu der Spannungsdifferenz zwischen der Referenzelektrode und der zweiten Meßelektrode in Bezug gesetzt. Durch die unterschiedlichen chemischen Zusammensetzungen der beiden Meßelektroden lassen die Einzelsignale Rückschlüsse auf unterschiedliche Unterkombinationen von Einzelbestandteilen des Gesamtgemisches zu und ergeben nach dem Abstraktionsprinzip Werte für die Einzelbestandteile selbst. Wenn noch mehr Einzelbestandteile bestimmt werden sollten, dann kann es auch zweckmäßig sein, noch eine dritte Meßelektrode mit einer abweichenden chemischen Zusammensetzung auf dem erfindungsgemäßen Sensor vorzusehen.

Gegenstand der Erfindung ist ferner ein Verfahren zur Herstellung des vorstehend beschriebenen planaren Sensors aus Zirkondioxid und Aluminiumoxid, der für die Messung der Anteile an Sauerstoff und brennbaren Gasen in den Abgasen von Verbrennungsmotoren oder Verbrennungsöfen geeignet ist. Das Verfahren ist dadurch gekennzeichnet, daß man eine flüssige keramische Foliengießmasse, die organische Additive, insbesondere ein flüchtiges organisches Lösungsmittel, fein verteiltes Zirkondioxid und gegebenenfalls anorganische Dotierstoffe enthält, auf einer ebenen Unterlage ausgießt und dabei einen dünnen Film erzeugt, man den Film trocknet und von der Unterlage ablöst, man aus dem getrockneten Film mehrere gleich große Karten ausstanzt, die etwa den Abmessungen des späteren Sensors entsprechen, man auf der Oberfläche einer ersten Karte durch Aufdrucken einer Platinmetallpaste eine bis wenigstens zum Mittenbereich der Karte verlaufende Elektrode aufbringt, die über eine Leiterbahn mit dem Rand der Karte verbunden ist, man auf diese erste Oberfläche mindestens eine zweite Karte aufbringt, die im Mittenbereich eine Ausnehmung aufweist, man auf diese zweite Karte mindestens eine dritte Karte, die eine wenigstens bis zum Mittenbereich der Karte sich erstreckende Platinelektrode und eine wenigstens bis zum Mittenbereich der Karte sich erstreckende Platinlegierungselektrode trägt, welche durch Aufdrucken entsprechender Pasten aufgebracht werden , so aufbringt, daß die Oberfläche mit den Platin- und Platinlegierungselektroden der zweiten Karte mit der Ausnehmung im Mittenbereich abgewandt ist, und man diesen Kartenaufbau oxidierend bei 1400 bis 1600°C brennt, wobei die drei Karten zu einem Zirkondioxidsensor mit planarem Aufbau zusammensintern.

Die verwendete flüssige keramische Foliengießmasse enthält als organische Additive insbesondere Bindemittel, Dispergiermittel, ein flüchtiges Lösungsmittel (z.B. Trichlorethylen/Alkohol) und Weichmacher. Die zum Ausgießen verwendete Unterlage kann eine Stahlplatte, ein bewegliches Stahlband oder eine glatte Kunststoffolie, z.B. eine Polyesterfolie sein. Die Dicke des entstehenden Films beträgt etwa 0,2 bis 2 mm, vorzugsweise 0,3 bis 0,9 mm. Eine konstante Schichtdicke des dünnen Films läßt sich durch Einsatz eines Gießschuhs erhalten. Das Trocknen des Films kann auch kontinuierlich geschehen. Die Abmessungen der ausgestanzten Karten schrumpfen im keramischen Brand je nach dem Volumenanteil an organischen Komponenten um 10 bis 30 %, insbesondere 22 bis 25 %.

Die Erfindung wird nachfolgend anhand der beigefügten Figuren beispielhaft näher erläutert, sie soll aber nicht auf die konkret dargestellte Ausführungsform beschränkt sein.

Figur 1 zeigt schematisch den Schichtaufbau eines erfindungsgemäßen Sensors.

Figur 2 zeigt einen senkrechten Schnitt durch einen Sensor der Figur 1 entlang der Linie A -- A in seitlicher Ansicht.

Figur 3 zeigt den Heizleiter aufgebracht auf Aluminiumoxidkeramik aus Figur 1 in einer Ansicht von unten.

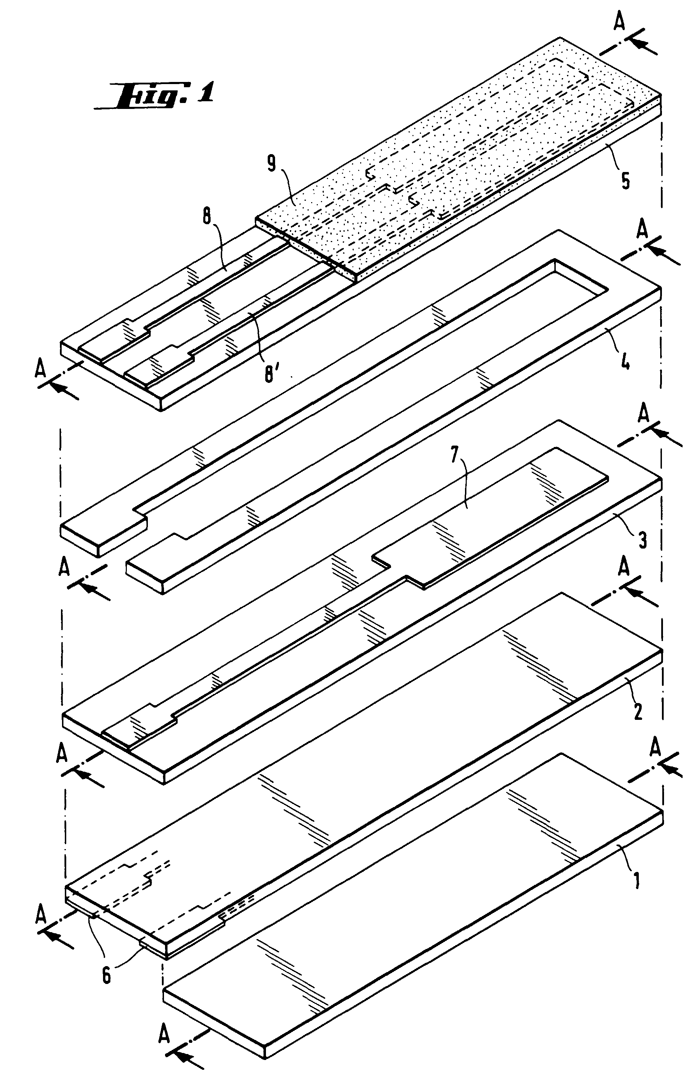

Mit Bezugsziffern sind in Figur 1 die erste Aluminiumoxidschicht 1 und die zweite Aluminiumoxidschicht 2 verdeutlicht, wobei auf der Unterseite der zweiten Aluminiumoxidschicht 2 nur im Ansatz die elektrische Heizleiterbahn 6 erkennbar ist. An die zweite Aluminiumoxidschicht 2 schließt sich die erste Zirkondioxidschicht 3 an, die auf ihrer Oberseite eine Elektrode 7 aus Platin trägt. Die Zirkondioxidschicht 4 mit der zentralen Ausnehmung folgt dann und den Abschluß bildet endlich die Zirkondioxidschicht 5, die auf ihrer Oberseite zwei parallel angeordnete Elektroden 8 und 8', eine aus Platin und eine aus einer Platinlegierung, trägt, welche im Bereich der eigentlichen Meßfläche durch eine dünne Schutzschicht 9 aus Mullit, Spinell oder porösem Zirkondioxid überzogen sind.

In Figur 2 haben gleiche Bezugsziffern gleiche Bedeutung wie in Figur 1.

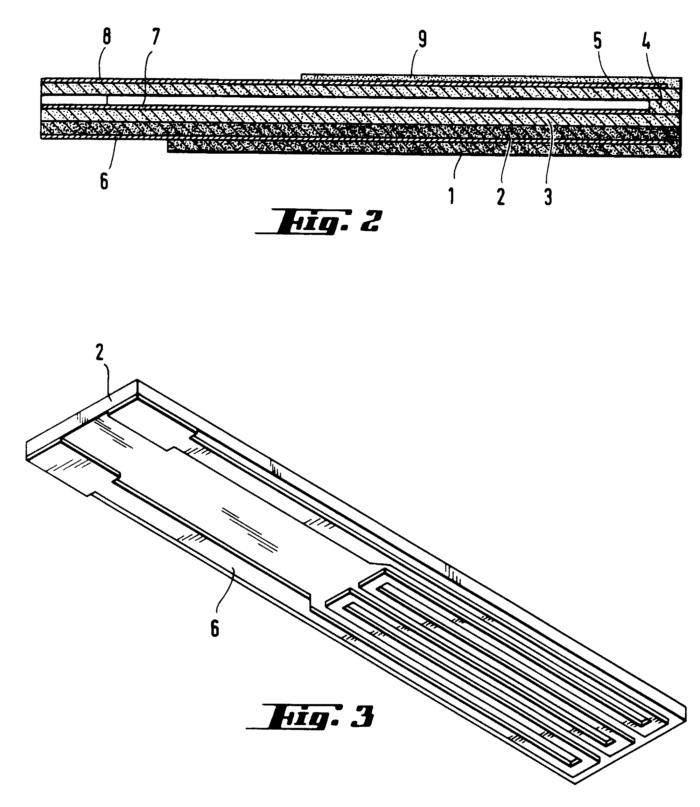

Figur 3 läßt die zweite Aluminiumoxidschicht 2 in einer Ansicht von unten erkennen, wobei insbesondere deutlich wird, wie sich die elektrische Heizleiterschicht 6 mäanderförmig über die Unterseite der Schicht 2 erstreckt.

## Patentansprüche

1. Planarer Sensor aus Keramikmaterial zur Messung und zum Nachweis brennbarer Gase und/oder des Sauerstoffgehaltes in Verbrennungsöfen oder in den Abgasen von Verbrennungsmotoren, bestehend aus einem wenigstens fünfschichtigen Aufbau auf Basis einer Kombination von drei Zirkondioxidschichten (3,4,5) mit zwei Aluminiumoxidschichten (1,2), wobei ein metallischer Heizleiter (6) zwischen zwei Aluminiumoxidschichten (1,2) eingebettet ist und wobei drei Zirkondioxidschichten (3,4,5) mit zwei Platinelektroden (7,8) und wenigstens einer weiteren Elektrode (8') aus einer binären oder ternären Legierung von Platin mit Gold, Nickel, Kupfer, Rhodium, Ruthenium, Palladium oder Titan kombiniert sind.

2. Sensor nach Anspruch 1, dadurch gekennzeichnet, daß die Zirkondioxidschichten (3,4,5) so angeordnet sind, daß auf einer ersten Schicht (3) eine Elektrode (7) aus Platin angeordnet ist, die in Form einer Paste aufgetragen wird, die das Metall als feinteiliges Pulver zusammen mit einem organischen Bindemittel und gegebenenfalls Lösemittel enthält, und daß auf der ersten Schicht (3) mit der Elektrode (7) aus Platin eine zweite Schicht (4) aus Zirkondioxid angeordnet ist, die eine zentrale Ausnehmung aufweist mit einer Verbindung zu einer Außenkante der Schicht (4), und daß den Abschluß eine dritte Schicht (5) aus Zirkondioxid bildet, die auf ihrer Oberseite, die der zweiten Schicht (4) mit der Ausnehmung abgewandt ist, zwei vorzugsweise parallel angeordnete Elektrode (8,8') aus Platin und aus einer binären oder ternären Legierung von Platin mit Gold, Nickel, Kupfer, Rhodium, Ruthenium, Palladium oder Titan trägt.

3. Sensor nach Anspruch 2, dadurch gekennzeichnet, daß die Elektroden (8,8') der dritten Schicht (5) aus Zirkondioxid zusätzlich mit einer Schutzschicht (9) überzogen sind.

4. Sensor nach einem der Ansprüche 1 bis 3, dadurch gekennzeichnet, daß die Platin- und Platinlegierungsschichten (8,8') auf der dritten Schicht (5) aus Zirkondioxid in Form von Pasten aufgetragen sind, die Platin oder die Legierung als feinteiliges Pulver zusammen mit organischen Bindemitteln und gegebenenfalls noch Lösemittel enthalten.

5. Sensor nach einem der Ansprüche 1 bis 4, dadurch gekennzeichnet, daß die Zirkondioxidmasse zusätzlich CaO, MgO, CeO und/oder Y₂O₃ als anorganische Dotierstoffe enthält, wobei die Menge der Dotierstoffe im Bereich von 3,5 bis 14,0 Gew.-% liegt, vorzugsweise von 5 bis 10 Gew.-%, bezogen auf die Gesamtmenge an Zirkondioxidmasse.

6. Sensor nach einem der Ansprüche 1 bis 5, dadurch gekennzeichnet, daß die Schichtdicken (3,4,5) der einzelnen Zirkondioxidschichten unterschiedlich sind und im Bereich von 0,2 bis 2,0 mm liegen, vorzugsweise von 0,5 bis 1,1 mm, besonders bevorzugt von 0,5 bis 0,9 mm.

7. Sensor nach einem der Ansprüche 1 bis 6, dadurch gekennzeichnet, daß der elektrische Heizleiter (6) vorzugsweise mäanderförmig verläuft und vorzugsweise aus Wolfram aufgebaut ist.

8. Sensor nach einem der Ansprüche 1 bis 7, dadurch gekennzeichnet, daß er mit einem Gehäuse kombiniert ist, dessen Innenraum durch ein den Sensor ortsfest fixierendes Keramikelement gasdicht in zwei Kammern unterteilt ist, von denen die eine Kammer mit den Verbrennungsabgasen in unmittelbarem Kontakt steht und von denen die andere Kammer von den Verbrennungsabgasen isoliert ist, wobei der Sensor in dem Gehäuse so angeordnet ist, daß die freien Elektroden (8,8') sich in der Kammer mit den Verbrennungsabgasen befinden, während ein Spannungsabgriff in der isolierten Kammer erfolgt

9. Verfahren zur Herstellung eines planaren Sensors nach einem der Ansprüche 1 bis 8, der für die Messung der Anteile an Sauerstoff und brennbaren Gasen in den Abgasen von Verbrennungsmotoren oder Verbrennungsöfen geeignet ist, ausgehend von keramischen Folien auf Basis von Zirkondioxid, dadurch gekennzeichnet, daß man eine flüssige keramische Foliengießmasse, die organische Additive, insbesondere ein flüchtiges organisches Lösungsmittel, fein verteiltes Zirkondioxid und gegebenenfalls anorganische Dotierstoffe enthält, auf einer ebenen Unterlage ausgießt und dabei einen dünnen Film erzeugt, man den Film trocknet und von der Unterlage ablöst, man aus dem getrockneten Film mehrere gleich große Karten (3,4,5) ausstanzt, man auf der Oberfläche einer ersten Karte (3) durch Aufdrucken einer Platinmetallpaste eine bis wenigstens zum Mittenbereich der Karte (3) verlaufende Elektrode (7) aufbringt, man auf diese erste Oberfläche mindestens eine zweite Karte (4) aufbringt, die im Mittenbereich eine Ausnehmung aufweist, man auf diese zweite Karte (4) mindestens eine dritte Karte (5), die eine wenigstens bis zum Mittenbereich der Karte (5) sich erstreckende Platinelektrode (8) und eine wenigstens bis zum Mittenbereich der Karte sich erstreckende Platinlegierungselektrode (8') trägt, welche durch Aufdrucken entsprechender Pasten aufgebracht werden, so aufbringt, daß die Oberfläche mit der Platin- und der Platinlegierungselektrode (8,8') der zweiten Karte (4) mit der Ausnehmung im Mittenbereich abgewandt ist, und man diesen Kartenaufbau oxidierend bei 1400 bis 1600°C brennt, wobei die drei Karten (3,4,5) zu einem Zirkondioxidsensor zusammensintern.

10. Verfahren nach Anspruch 9, dadurch gekennzeichnet, daß eine flüssige keramische Foliengießmasse verwendet wird, die zusätzlich organische Additive, insbesondere Binder, Dispergiermittel, ein flüchtiges Lösungsmittel und Weichmacher enthält.

11. Verfahren nach Anspruch 9, dadurch gekennzeichnet, daß zum Ausgießen als Unterlage eine Stahlplatte, ein bewegliches Stahlband oder eine glatte Kunststoffolie, insbesondere eine Polyesterfolie, verwendet wird.

## Claims

1. A planar sensor made of ceramic material, for measuring and detecting combustible gases and/or the oxygen content in furnaces or in the exhaust gases of internal combustion engines, which consists of an at least five-layered structure on the basis of a combination of three zirconium dioxide layers (3, 4, 5) with two aluminum oxide layers (1, 2), a metallic heating resistor (6) being embedded between two aluminum oxide layers (1, 2) and three zirconium dioxide layers (3, 4, 5) being combined with two platinum electrodes (7, 8) and at least one further electrode (8') made of a binary or ternary alloy of platinum with gold, nickel, copper, rhodium, ruthenium, palladium or titanium.

2. The sensor as claimed in claim 1, wherein the zirconium dioxide layers (3, 4, 5) are arranged in such a way that, on a first layer (3), an electrode (7) made of platinum is arranged which is applied in the form of a paste comprising the metal as a finely particulate powder together with an organic binder and, if required, solvent, and wherein, on the first layer (3) with the electrode (7) made of platinum, a second layer (4) made of zirconium dioxide is arranged which has a central cutout with a connection to an external edge of the layer (4), and wherein the termination is formed by a third layer (5) made of zirconium dioxide which, on its surface which faces away from the second layer (4) having the cutout, carries two electrodes (8, 8') which are preferably arranged parallel and which are made of platinum and of a binary or ternary alloy of platinum with gold, nickel, copper, rhodium, ruthenium, palladium or titanium.

3. The sensor as claimed in claim 2, wherein the electrodes (8, 8') of the third layer (5) made of zirconium dioxide are additionally coated with a protective layer (9).

4. The sensor as claimed in any one of claims 1 to 3, wherein the platinum layers and platinum alloy layers (8, 8') on the third layer (5) made of zirconium dioxide are applied in the form of pastes which comprise platinum or the alloy as a finely particulate powder together with organic binders and additionally, if required, solvent.

5. The sensor as claimed in any one of claims 1 to 4, wherein the zirconium dioxide composition additionally comprises CaO, MgO, CeO and/or Y₂O₃ as inorganic dopants, the amount of the dopants being in the range from 3.5 to 14.0% by weight, preferably from 5 to 10% by weight, based on the total amount of zirconium dioxide composition.

6. The sensor as claimed in any one of claims 1 to 5, wherein the layer thicknesses (3, 4, 5) of the individual zirconium dioxide layers are different and are in the range from 0.2 to 2.0 mm, preferably from 0.5 to 1.1 mm, particularly preferably from 0.5 to 0.9 mm.

7. The sensor as claimed in any one of claims 1 to 6, wherein the electric heating resistor (6) has a preferably meander-like course and is preferably constructed from tungsten.

8. The sensor as claimed in any one of claims 1 to 7, wherein it is combined with a housing whose interior is subdivided into two chambers in a gas-tight manner by a ceramic element fixing the position of the sensor, one of which chambers is in direct contact with the combustion exhaust gases, and the other of which chambers is insulated against the combustion exhaust gases, the sensor being arranged in the housing in such a way that the free electrodes (8, 8') are located in the chamber containing the combustion exhaust gases, while a voltage pickoff takes place in the insulated chamber.

9. A process for fabricating a planar sensor as claimed in any one of claims 1 to 8, which sensor is suitable for measuring the proportions of oxygen and combustible gases in the exhaust gases of internal combustion engines or furnaces, starting from ceramic tapes on the basis of zirconium dioxide, which comprises casting a liquid ceramic tape-casting composition comprising organic additives, especially a volatile organic solvent, finely dispersed zirconium dioxide and optionally inorganic dopants, onto a flat substrate and generating a thin film in the process, drying the film and detaching it from the substrate, punching a plurality of equal-sized cards (3, 4, 5) from the dried film, applying onto the surface of a first card (3), by printing a platinum metal paste thereon, an electrode (7) which extends at least as far as the central region of the card (3), applying onto this first surface at least one second card (4) which in its central region has a cutout, applying onto this second card (4) at least one third card (5) which carries a platinum electrode (8) extending at least as far as the central region of the card (5) and a platinum alloy electrode (8') extending at least as far as the central region of the card, which electrodes are applied by corresponding pastes being printed on, in such a manner that the surface having the platinum electrode and the platinum alloy electrode (8, 8') faces away from the second card (4) having the cutout in the central region, and firing this card structure oxidatively at from 1400 to 1600°C, the three cards (3, 4, 5) sintering together to form a zirconium dioxide sensor.

10. The process as claimed in claim 9, wherein a liquid ceramic tape-casting composition is used which additionally comprises organic additives, especially binders, dispersants, a volatile solvent and plasticizers.

11. The process as claimed in claim 9, wherein the substrate used for casting is a steel plate, a mobile steel strip or a smooth plastic film, especially a polyester film.

## Revendications

1. Capteur planaire en un matériau céramique, pour mesurer et détecter des gaz combustibles et/ou la teneur en oxygène de fours à combustion ou de gaz d'échappement de moteurs à combustion interne, constitué d'une structure à au moins cinq couches, à base d'une combinaison de trois couches de dioxyde de zirconium (3, 4, 5) et de deux couches d'oxyde d'aluminium (1, 2), un conducteur chauffant métallique (6) étant intercalé entre deux couches d'oxyde d'aluminium (1, 2), et trois couches de dioxyde de zirconium (3, 4, 5) étant combinées à deux électrodes en platine (7, 8) et à au moins une électrode supplémentaire (8), constituée d'un alliage binaire ou ternaire de platine et d'or, de nickel, de cuivre, de rhodium, de ruthénium, de palladium ou de titane.

2. Capteur selon la revendication 1, caractérisé en ce que les couches de dioxyde de zirconium (3, 4, 5) sont disposées de telle façon que sur une première couche (3) est disposée une électrode (7) en platine, qui est appliquée sous forme d'une pâte contenant le métal sous forme d'une poudre finement divisée, en même temps qu'un liant organique et éventuellement des solvants, et que, sur la première couche (3) comportant l'électrode (7) en platine est disposée une deuxième couche (4) en dioxyde de zirconium, qui comporte un évidement central avec une liaison à une arête extérieure de la couche (4), et que l'on a finalement une troisième couche (5) en dioxyde de zirconium, qui sur sa face supérieure, qui est opposée à la deuxième couche (4) comportant l'évidement, porte deux électrodes (8, 8'), disposées de préférence d'une manière parallèle, en platine et en un alliage binaire ou ternaire de platine et d'or, de nickel, de cuivre, de rhodium, de ruthénium, de palladium ou de titane.

3. Capteur selon la revendication 2, caractérisé en ce que les électrodes (8, 8') de la troisième couche (5) en dioxyde de zirconium sont en outre revêtues d'une couche de protection (9).

4. Capteur selon l'une des revendications 1 à 3, caractérisé en ce que les couches de platine et d'alliage de platine (8, 8') sont appliquées sur la troisième couche (5) en dioxyde de zirconium sous forme de pâtes, qui contiennent le platine ou l'alliage sous forme d'une poudre finement divisée, avec des liants organiques et éventuellement encore des solvants.

5. Capteur selon l'une des revendications 1 à 4, caractérisé en ce que la masse de dioxyde de zirconium contient en outre du CaO, du Mgo, du CeO et/ou de l'Y₂O₃ en tant que dopants minéraux, où la quantité des dopants est comprise dans l'intervalle de 3,5 à 14,0 et de préférence de 5 à 10 % en poids par rapport à la quantité totale de la masse de dioxyde de zirconium.

6. Capteur selon l'une des revendications 1 à 5, caractérisé en ce que les épaisseurs (3, 4, 5) des différentes couches de dioxyde de zirconium sont différentes et sont comprises dans l'intervalle de 0,2 à 2,0 mm, de préférence de 0,5 à 1,1 mm et tout particulièrement de 0,5 à 0,9 mm.

7. Capteur selon l'une des revendications 1 à 6, caractérisé en ce que le conducteur chauffant électrique (6) court de préférence en méandres et est de préférence réalisé en tungstène.

8. Capteur selon l'une des revendications 1 à 7, caractérisé en ce qu'il est combiné à un boîtier dont le volume intérieur est subdivisé d'une manière étanche, par un élément céramique fixant le capteur fermement en position, en deux compartiments, l'un des compartiments étant en contact immédiat avec les gaz d'échappement, et l'autre compartiment étant isolé des gaz d'échappement, le capteur se trouvant dans le boîtier étant disposé de telle sorte que les électrodes libres (8, 8') se trouvent dans le compartiment contenant les gaz d'échappement, tandis qu'une prise de tension a lieu dans le compartiment isolé.

9. Procédé pour fabriquer un capteur planaire selon l'une des revendications 1 à 8, qui convient à la mesure des proportions d'oxygène et de gaz combustible dans les gaz d'échappement de moteurs à combustion interne ou de fours de combustion, à partir de feuilles céramiques à base de dioxyde de zirconium, caractérisé en ce qu'on coule sur un support plan une masse céramique liquide pour coulée de feuilles, qui contient des additifs organiques, en particulier un solvant organique volatil, du dioxyde de zirconium finement divisé et éventuellement des dopants minéraux, de façon à former un film mince; on sèche le film et on le détache du support; à partir du film séché, on découpe plusieurs cartes (3, 4, 5) de mêmes dimensions; on applique sur la surface d'une première carte (3), par impression d'une pâte métallique à base de platine, une électrode (7) courant au moins jusqu'à la zone centrale de la carte. (3); on applique sur cette première surface au moins une deuxième carte (4), qui dans sa zone centrale comporte un évidement; on applique sur cette deuxième carte (4) au moins une troisième carte (5), qui porte une électrode en platine (8), s'étendant au moins jusqu'à la zone centrale de la carte (5), et une électrode (8') en un alliage de platine, s'étendant au moins jusqu'à la zone centrale de la carte, électrodes qui sont appliquées par impression de pâtes correspondantes, et ce, de telle sorte que la surface portant l'électrode en platine et l'électrode en un alliage de platine (8, 8') soit opposée à la deuxième carte (4) comportant un évidement dans sa zone centrale; et on cuit dans un milieu oxydant cette structure de carte à une température de 1400 à 1600°C, les trois cartes (3, 4, 5) étant réunies par frittage pour donner un capteur au dioxyde de zirconium.

10. Procédé selon la revendication 9, caractérisé en ce qu'on utilise une masse céramique liquide pour coulée de feuilles, qui contient en outre des additifs organiques, en particulier des liants, des dispersants, un solvant volatil et des plastifiants.

11. Procédé selon la revendication 9, caractérisé en ce que, pour la coulée, on utilise comme support une plaque en acier, une bande mobile en acier ou une feuille plastique lisse, en particulier une feuille de polyester.
